# EUROPÄISCHE PATENTSCHRIFT

(11) **EP 0 608 197 B1**
(45) Veröffentlichungstag und Bekanntmachung des Hinweises auf die Patenterteilung: **24.03.1999**
(21) Anmeldenummer: 94810005.2
(22) Anmeldetag: 07.01.1994
(51) Int. Cl.: G07F 7/02, G07F 19/00

(54) **Verfahren als Sicherheitskonzept gegen unbefugte Verwendung eines Zahlungsmittels beim bargeldlosen Begleichen an Zahlstellen**
Method, as a security concept, against unauthorised use of payment means for the cashless settlement at a paying office
Méthode, conçue comme concept de sécurité, contre l'utilisation inautorisée d'un moyen de paiement, lors du réglement comptant à un office de paiement

(30) Priorität: 18.01.1993 CH 136/93
(43) Veröffentlichungstag der Anmeldung: 27.07.1994
(73) Patentinhaber: ASCOM AUTELCA AG, 3073 Gümligen (CH)
(72) Erfinder: Derksen, Eduard, CH-3089 Hinterfultigen (CH)
(74) Vertreter: Roshardt, Werner Alfred, Dipl.-Phys.

(56) Entgegenhaltungen:
- EP-A- 0 232 058
- EP-A- 0 356 121
- EP-A- 0 406 841
- EP-A- 0 440 549
- FR-A- 2 503 423
- GB-A- 2 191 029
- US-A- 4 001 550
- US-A- 4 859 837

## Beschreibung

Die Erfindung betrifft ein Verfahren und eine Vorrichtung gegen unbefugte Verwendung eines Zahlungsmittels bei bargeldlosen Begleichen an Zahlstellen.

Unter Dienstleistungen werden u. a. Fahrkarten und Billette zur Benützung eines Zugs, Omnibusses oder Flugzeugs, etc., Eintrittskarten in Museen, Theatervorstellungen, usw. sowie auch die Ausgabe von Bargeld verstanden. Unter Warenbezügen werden einerseits der Bezug von Waren, welche in einem Geschäft ausgewählt worden sind, und andererseits direkt durch einen Automaten ausgegebene Waren verstanden, wie z. B. Süßigkeiten, Getränke, Zeitungen, Lebensmittel, sowie alle Arten von beweglichen Produkten, welche bestimmte, durch den Automaten vorgegebene Maße nicht überschreiten. Der Automat enthält eine Zahlstelle zum bargeldlosen Begleichen des Warenbezugs.

Je nach Verwendungszweck gab es nun die unterschiedlichsten Zahlstellen, wie z. B. an Automaten zum Bezug von Fahrkarten für öffentliche Verkehrsmittel, zur Begleichung einer Summe bei einem Warenbezug an einer Kasse in einem Warenhaus, etc. Die Begleichung von Kleinbeträgen erfolgte an Zahlstellen durch ein vorausbezahltes bargeldloses Zahlungsmittel, in der Regel einem kartenförmigen Gegenstand mit einer maschinell lesbaren Information und/oder einem eingesetzten Chip. Die Begleichung größerer Beträge erfolgte in der Regel mittels Debit-, Kredit- oder Kundenkarten, welche ebenfalls eine maschinell lesbare Information enthielten.

War der zu begleichende Gegenwert, z. B. für eine U-Bahn- oder Omnibusfahrt, gering, waren die vorausbezahlten bargeldlosen Zahlungsmittel derart ausgestaltet, daß zwar ihre Fälschung einen gewissen Aufwand darstellte, eine unbefugte Verwendung jedoch durch jedermann, sei es nun durch einen unehrlichen Finder oder einen Dieb, möglich war. Handelte es sich z. B. um einen Bargeldbezug oder einen Bezug von Waren höheren Werts, so reichte in der Regel der Besitz eines bargeldlosen Zahlungsmittels zum Warenbezug nicht aus, es mußte zusätzlich z. B. in das Tastenfeld der Zahlstelle ein PIN-Code als Berechtigungskontrolle zur Inhaberidentifizierung eingetippt werden, wobei durch die Zahlstelle je nach Sicherheitsstufe zusätzlich eine "Nachfrage" (on-line Authentizierung) bei der kontoführenden Einrichtung, in einer Sperrliste, einem Positiv-File, etc. erfolgen konnte.

Je nach der Art und des Wertes der bezogenen oder zu beziehenden Waren und/oder Dienstleistungen benötigte der Kunde mehrere bargeldlose Zahlungsmittel.

Aus der EP-A 0 356 121 ist ein Verfahren als Sicherheitskonzept gegen unbefugte Verwendung eines Zahlungsmittels zum bargeldlosen Begleichen von Waren- und/oder Dienstleistungsbezügen bekannt. Das Zahlungsmittel hatte hierbei mehrere Speicherelemente und konnte an mehreren Zahlstellen eingesetzt werden. Zur Begleichung der Waren- und/oder Dienstleistungsbezüge wurde ein in einem ersten Speicherelement abgespeicherter Geldbetrag um einen Teilbetrag verändert und anschließend überprüft. Bei der Überprüfung wurde ermittelt, ob ein abgespeicherter Endwert im ersten Speicherelement durch den neuen Geldbetrag überschritten (unterschritten) wurde. Bei einem Überschreiten wurde die Begleichung nicht ausgeführt. Bei einer Nichtüberschreitung wurde unter Abspeichern des neuen Geldbetrags im ersten Speicherelement und unter Veränderung eines, die Anzahl der Zahlstellenbenutzungen abspeichernden zweiten Speicherelements des Zahlungsmittels um einen Wert auf eine neue Bezugszahl ausgeführt.

Die aus der EP-A 0 356 121 bekannte Anordnung hatte mehrere Zahlstellen. Die Zahlstellen waren mit einem einzigen mehrere Speicherelemente aufweisenden bargeldlosen Zahlungsmittel bedienbar. Das Zahlungsmittel hatte ein erstes Speicherelement für einen Geldbetrag zum bargeldlosen Begleichen von Waren- und/oder Dienstleistungen durch einen Teilbetrag. Ferner hatte das Zahlungsmittel ein zweites Speicherelement für eine Anzahl möglicher Zahlstellenbenutzungen. Jede der Zahlstellen wies eine Verarbeitungseinheit auf. Mit der Verarbeitungseinheit waren die jeweils infolge von Waren- und/oder Dienstleistungsbegleichungen vom Zahlungsmittel gelesenen Daten veränderbar. Ferner hatte jede Zahlstelle eine Vergleichseinheit. Mit der Vergleichseinheit war ein mögliches Überschreiten eines Endwerts in Bezug auf das erste Speicherelement durch den Teilbetrag zur Begleichung des Waren- und/oder Dienstleistungsbezugs feststellbar. Jede Zahlstelle hatte eine Abspeichereinheit, mit der bei Nichtüberschreiten dieses Endwerts in das erste und zweite Speicherelement die neuen Daten einschreibbar waren.

Aus der US-A 4,001,550 ist ein kartenförmiges bargeldloses Zahlungsmittel bekannt, welches bei Transaktionen eines geringen Geldwerts keine Überprüfung des Benutzers verlangte. Es wurde hier ein Einkaufsbetrag der zur identifizierten Bank transferiert werden sollte aufgezeichnet, wobei jeweils der Betrag auf dem Zahlungsmittel und der Gesamtbetrag der Transaktionen seit einer letzten Aktualisierung auf den augenblicklichen Stand gebracht wurden. Wurde ein minimaler Betrag überschritten, wurde eine Benutzeridentifizierung verlangt bzw. eine Verbindung zu einer Datenzentrale hergestellt.

Hier will nun die Erfindung Abhilfe schaffen und die Anzahl der für eine Begleichung von Warenbezügen und/oder Dienstleistungen zu verwendenden bargeldlosen Zahlungsmittel und deren dazugehörigen Zahlstellenanordnungen unter Gewährung gestaffelter Sicherheitsgrade als Sicherheitskonzept reduzieren. Die Staffelung erfolgt vorteilhafterweise nach der Höhe des Risikos für den Inhaber des bargeldlosen Zahlungsmittels, wobei hierfür entsprechend ausgebildete Zahlstellen vorgesehen werden.

Im übertragenen Sinne kann das bei dem erfindungsgemäßen Verfahren mit der erfindungsgemäßen Anordnung verwendete bargeldlose Zahlungsmittel in erster Näherung als ein Geldbeutel verstanden werden, der wenigstens zwei von einander getrennte Geldfächer besitzt, wobei im ersten Fach ein großer, z.B. CHF 500, und im zweiten Fach ein kleiner Risikobetrag z.B. CHF 50 verstaut ist. Das zweite Fach kann nun n-mal zur Geldentnahme geöffnet werden. Eine (n+1)-male Geldentnahme ist erst wieder möglich, wenn eine Identifizierung des Zahlungsmittelinhabers, z.B. durch Eingabe eines PIN-Codes oder eines biometrischen Echtheitsmerkmals (Fingerabdruck, Unterschrift, sprachliche Erkennungszeichen, etc.) an einer entsprechenden Zahlstelle erfolgt ist. Nach der Identifizierung kann wieder n-mal "zugegriffen" werden.

Ist jedoch das zweite Geldfach mit dem kleinen Risikobetrag leer, so ist ebenfalls kein weiterer Zugriff mehr möglich, auch wenn weniger als n-mal geöffnet wurde. Es muß nun ebenfalls eine Identifikation, wie oben beschrieben, erfolgen sowie zusätzlich eine on-line Authentizitätsprüfung des Zahlungsmittels, z.B. durch eine Rückfrage bei einer Kontrolleinheit, in der ungültige (gestohlene, verlorene, überzogene, ...) Zahlungsmittel abgespeichert sind.

Bei der Erfindung wird der ausgegebene Geldbetrag immer nur von einem einzigen, vom Konto abgehobenen Betrag entnommen, der faktisch dem Zahlungsmittelinhaber immer voll zur Verfügung steht.

Dieser Betrag kann nur in einer on-line Zahlstelle direkt vom Konto des Zahlmittelinhabers entnommen werden (Aufladen des Zahlungsmittels), wobei eine Entnahme nur mit Prüfung der Identität des Zahlungsmittelinhabers und der Authentizität des Zahlungsmittels erfolgt. Bevorzugt erfolgt gleichzeitig mit der Entnahme eine Gutschrift dieses Betrags auf dem Pool-Konto des bzw. der Zahlungsmittelherausgeber bzw. einer Dienstleistung bzw. Waren anbietenden Betriebs. Unter einem Pool wird eine Zusammenfassung von Gesellschaften, Betrieben, etc. verstanden, welche eine gemeinsame Abrechnung für die bei ihnen bezogenen Waren bzw. Dienstleistungen durchführen. Der durch die Entnahme vom Pool-Konto auf dem Zahlungsmittel gutgeschriebene Betrag wird dann, wie oben ausgeführt, durch eine Reihe von Teilbeträgen für Waren- und Dienstleistungsbezüge, wie z. B. Benutzung öffentlicher Verkehrsmittel, Essen in bestimmten Restaurants, etc. aufgebraucht.

Um nicht plötzlich mit leerem "Geldbeutel" dazustehen, werden bevorzugterweise sog. Vorwarnwerte abgespeichert, welche eine Meldung ausgeben, wenn z. B. noch 10 bis 20% der maximal möglichen Anzahl von Zahlstellenbenutzungen durchführbar bzw. des Risikobetrages vorhanden sind. Es kann dann rechtzeitig eine Freigabe weiterer Zahlstellenbenutzungsvorgänge (Anfangswert) bzw. eines Anfangswerts des Risikobetrags oder eine neue Aufladung des Zahlungsmittels vorgenommen werden.

Der Vorwarnwert muß nicht unbedingt auf dem Zahlungsmittel abgespeichert werden; er kann in der Zahlstelle abgespeichert werden und auch von Zahlstelle zu Zahlstelle variieren. Analog kann mit dem Risikobetrag verfahren werden.

Da aus buchhalterischen Gründen obiger "Geldbeutel" nur jeweils für die Verwendung für einen Pool aufgeladen werden kann, ist es vorteilhaft, auf dem Zahlungsmittel mehrere voneinander getrennte Speichersysteme anzubringen, welche für unterschiedliche Poolsysteme reserviert sind. Die Identifizierung des Pools kann dann durch ein abgespeichertes Kennzeichen auf dem Zahlungsmittel erfolgen; eventuell kombiniert mit separaten kryptographischen Schlüsseln.

Mit dem Zahlungsmittel kann nun, da die Identifizierungsdaten, welche zum Auffrischen und Geldaufnehmen benötigt werden, bereits abgespeichert sind, ein Aufladen an einer bestimmten Zahlstelle direkt vom Konto (unter Authentizierung) erfolgen. Da Kontobewegungen relativ hohe Verarbeitungskosten nach sich ziehen, wird dieser Vorgang nur bei relativ großen Geldbeträgen und der oben beschriebene "Geldbeutelvorgang" mit Sicherheitskonzept bei kleinen Geldbeträgen, wo sich kostenmäßig eine on-line Authentizierung nicht rechtfertigt, verwendet. Eine on-line Authentizierung des Zahlungsmittels erfolgt immer dann, wenn aus Sicht des Zahlungsmittelinhabers eine Risikoschwelle überschritten wird.

Anstelle die Durchführung der Identizitäts- bzw. Authentizitätsüberprüfung nur von den Verarbeitungskosten abhängig zu machen, kann auch von der für die Überprüfung notwendigen Zeitspanne ausgegangen werden. Bei in der Regel schnell vonstatten zu gehenden Vorgängen, wie z. B. einem Erwerb einer Zugfahrkarte (bei einer länger andauernden Überprüfung ist eventuell der Zug bereits abgefahren), kann auch ein gegenüber den Verarbeitungskosten hoher Betrag ohne Überprüfung abgebucht werden. Die hierfür notwendigen Entscheidungen können in der betreffenden Zahlstelle eingebaut sein, wobei dann hier vorteilhafterweise der Risikobetrag automatisch erhöht wird.

Bevorzugterweise können auf dem Zahlungsmittel Mitteilungen für den Zahlungsmittelinhaber abgespeichert werden. Die Abspeicherungen können z. B. Erinnerungen an periodisch wiederkehrende Zahlungen oder ähnliches sein. Auch können jeweils neue Mitteilungen bei einem Kontakt mit der Bank, infolge einer Geldentnahme aus dem Konto, neu auf das Zahlungsmittel eingespeichert werden. Werden die so abgespeicherten Erinnerungen oder Zahlungen nicht vollzogen, wird der Zahlungsmittelinhaber an seine Zahlungsverpflichtungen erinnert. Nach Ausführung der Zahlungsanweisung wird die betreffende Erinnerung gelöscht.

Der Vorteil des Verfahrens als Sicherheitskonzept liegt darin, daß nur noch wenige, Verarbeitungskosten verursachende Kontobewegungen bei hierzu großen Geldbeträgen durchgeführt werden und kleine Beträge in der Höhe dieser Verarbeitungskosten kostenneutral direkt ab Zahlungsmittel abgebucht werden. Bei der Ausgabe dieser kleinen Beträge ist das maximale Risiko des Zahlungsmittelinhabers gegenüber Unrechtmäßigkeiten durch die vorgegebene Anzahl Zahlstellenbenutzungen ohne Identifizierung oder das Aufbrauchen eines vorgegebenen Risikobetrags ohne on-line Authentizierung begrenzt. Bevorzugterweise wird nun eine Auffrischung der Anzahl Zahlstellenbenutzungen ohne Identifizierung nur durch eine kostenneutrale Identitätsüberprüfung z. B. auch an einem Terminal ohne Host-Kontakt und eine Auffrischung des zur Verfügung stehenden Geldbetrags durch eine kostenreduzierte on-line Authentizitätsprüfung mit Host-Kontakt nur z. B. in einer Sperrliste vorgenommen. Es sind somit bargeldlose Waren- und Dienstleistungsbezüge mit kleinem Sicherheitsrisiko bei geringen anfallenden Verarbeitungskosten möglich.

Im folgenden werden Beispiele der erfindungsgemäßen Anordnung und des Zahlungsmittels anhand von Zeichnungen näher erläutert. Es zeigen:
- Fig. 1: eine schematische Darstellung eines bargeldlosen Zahlungsmittels in Kartenform,
- Fig. 2: ein Blockschaltbild einer ersten Zahlstelle einer Anordnung von Zahlstellen,
- Fig. 3: einer zweiten Zahlstelle und
- Fig. 4: einer dritten Zahlstelle.

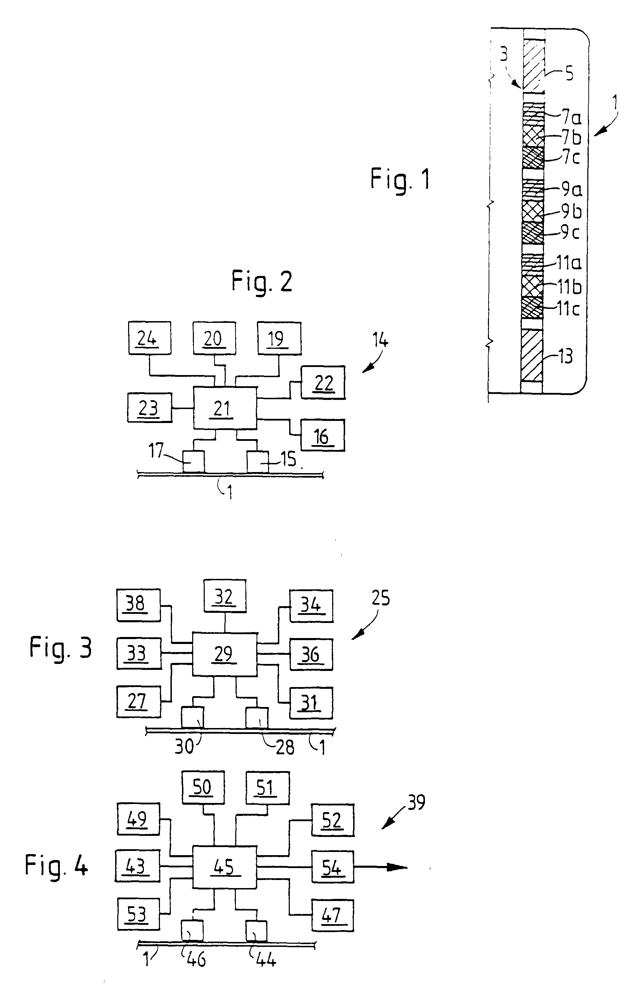

Das in **Figur 1** dargestellte handliche, kartenförmige Zahlungsmittel **1** kann mehrere nebeneinander angeordnete Magnetspuren aufweisen, wobei nur eine einzige mit der Bezugszahl **3** dargestellt ist. Analog gilt die gleiche Systematik auch für andere Kartentechnologien, wobei diese gegebenenfalls mehrere, voneinander unabhängige Speicher aufweisen können.

Auf der Magnetspur **3** sind mehrere als Speicherbereiche ausgebildete Speicherelemente vorhanden. Die Anordnung der Speicherbereiche ist nur symbolisch zu betrachten und hat mit dem tatsächlichen Ort nichts zu tun. Es sind folgende Speicherbereiche vorhanden:
- ein Speicherbereich **5**, in dem Identitätsdaten, wie die Kennzahl der kontoführenden Bank, allgemeine Kreditlimiten, Daten zur Verarbeitung einer Identifizierung des Inhabers, z. B. infolge einer Eingabe eines PIN-Codes mit der Tastatur einer Zahlstelle, abgelegt sind;
- ein Speicherbereich **7** mit einem Anfangswert **7a**, einem Vorwarnwert **7b** und einem Endwert 7c für eine Anzahl Benutzungen von Zahlstellen ohne PIN-Eingabe, wobei der Endwert **7c** auch ein Parameter der betreffenden Zahlstelle sein kann;
- ein Speicherbereich **9** mit einem Risikobetrag **9a**, einem Risikovorwarnbetrag **9b** und einem Risikoendbetrag **9c**, wobei der Endwert **9c** auch ein Parameter der betreffenden Zahlstelle sein kann;
- ein Speicherbereich **11** mit einem momentanen tatsächlichen Geldbetrag **11a**, einem Reservebetrag (Vorwarnwert) **11b**, bei dessen Erreichen der Zahlungsmittelinhaber durch das Terminal zum Nachladen aufgefordert wird, um nicht "zahlungsunfähig" zu sein, und einem nicht unterschreitbaren minimalen Geldbetrag **11c**; und
- ein Speicherbereich **13**, in dem Erinnerungsmitteilungen und/oder Ähnliches für den Zahlungsmittelinhaber abspeicherbar sind, wobei die Zahlstelle den Zahlungsmittelinhaber bei Nichterfüllung an seine Verpflichtungen erinnert.

Die in **Figur 2** dargestellte, erste Zahlstelle **14** dient zum Begleichen insbesondere von Dienstleistungsbezügen, wie einer Fahrberechtigung auf öffentlichen Verkehrsmitteln, Bezahlung von Straßen- und Brückenzoll, Eintrittskarten, etc.; d. h. zum Begleichen von kleineren, in der Größenordnung von Verarbeitungskosten für Kontobewegungen liegenden Beträgen. Die Zahlstelle **14** weist folgende logischen Einheiten auf:
- 15: eine mechanische Aufnahmeeinheit für das Zahlungsmittel oder eine andere Einheit, welche den Dialog mit dem Zahlungsmittel **1** ermöglicht,
- 16: eine Sicherheitseinheit, die eine off-line Authentizierung des Zahlungsmittels **1** ermöglicht (Option),
- 17: eine Lese/Schreibeinheit, mit der Informationen vom Zahlungsmittel **1** gelesen bzw. in dieses eingeschrieben werden können,
- 20: eine Anzeigeeinheit (Option),
- 21: eine Verarbeitungseinheit,
- 22: eine Vergleichseinheit,
- 23: einen Speicher und
- 24: einen Parameterzähler.

Die Zahlstelle **14** hat jedoch keine Tastatur zur Eingabe eines PIN-Codes und auch keine Kommunikationsvorrichtung zu einem Host, wie die nachfolgend beschriebenen zweiten und dritten Zahlstellen. Mit der ersten Zahlstelle **14** können nach Lesen der Daten **7a, 7b, 7c, 9a, 9b, 9c, 11a**, **11b** und **11c**
- im Speicherbereich **7** der Anfangsswert **7a** abgefragt und verändert sowie mit dem Vorwarnwert **7b** und dem Endwert **7c** durch die Verarbeitungseinheit 21 unter Zwischenspeicherung im Speicher **23** und Vergleich mit der Vergleichseinheit **22** verglichen werden sowie der neue Anfangswert **7a** ermittelt und wieder abgespeichert werden;
- im Speicherbereich **9** der Risikobetrag **9a** abgefragt und verändert sowie mit dem Risikovorwarnbetrag **9b** und dem Risikoendbetrag **9c** verglichen werden sowie der neue, um den Wert des Waren- oder Dienstleistungsbezugs vergrößerte Risikobetrag **9a** ermittelt und wieder abgespeichert werden;
- im Speicherbereich **11** der Geldbetrag **11a** abgefragt und verändert sowie mit dem Reservebetrag (Vorwarnwert) **11b** und der minimale Geldbetrag **11c** verglichen werden sowie der neue, um den Wert des Waren- oder Dienstleistungsbezugs verringerte Geldbetrag **11a** ermittelt und wieder abgespeichert werden.

Die Abläufe in den Speicherbereichen **7**, **9** und **11** sollen durch nachfolgende Tabelle näher erläutert werden:

Das Zahlungsmittel **1** weist einen Geldbetrag **11a** von z. B. CHF 500, der nach einem der unten beschriebenen Verfahren aufgeladen wurde, und einen Risikowert von z. B. CHF 0 sowie den Anfangswert 7a von z. B. 0 auf. Die Vorwarnwerte **7b**, **9b** und **11b** betragen 7, CHF 50 und CHF 40 sowie die Endwerte **7c** zehn, **9c** CHF 50 und **11c** CHF 0. Anstelle von Schweizer Franken können selbstverständlich auch Beträge anderer Währungen sowie auch deren Bruchteile benützt werden. Es ergeben sich somit folgende Speicherzustände:

| Speicherbereich | 11 | 9 | 7 |
|---|---|---|---|
| a | 500 | 0 | 0 |
| b | 50 | 40 | 7 |
| c | 0 | 50 | 10 |

Es wird nun unter Verwendung des Zahlungsmittels **1** eine Fahrkarte für CHF 3 erworben, worauf folgende Speicherzustände vorhanden sind:

| Speicherbereich | 11 | 9 | 7 |
|---|---|---|---|
| a | 497 | 3 | 1 |
| b | 50 | 40 | 7 |
| c | 0 | 50 | 10 |

Werden ausgehend von diesem Speicherzustand mit dem Zahlungsmittel **1** ferner sieben Fahrkarten mit einem Gesamtbetrag von insgesamt CHF 15 erworben, so ergeben sich folgende Zustände, wobei in der linken Tabelle der Ausgangszustand und in der rechten Tabelle der neue Zustand dargestellt sind:

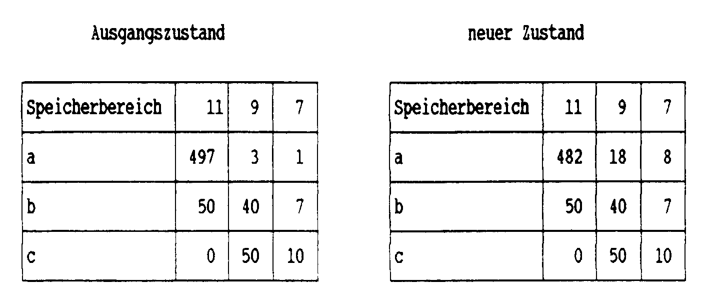

Da der Vorwarnwert **7b** überschritten wurde, wird (sofern vorhanden) von der Anzeigeeinheit **20** eine Mitteilung ausgegeben, welche den Zahlungsmittelinhaber auf fordert, an eine unten beschriebene zweite oder dritte Zahlstelle sich zu begeben, um nach Identifikation einen neuen Anfangswert **7a** (Wert 0) auf dem Zahlungsmittel **1** freizugeben.

Werden ausgehend vom unten dargestellten ursprünglichen Speicherzustand auf dem Zahlungsmittel **1** sechs Fahrkarten mit einem Gesamtbetrag von insgesamt CHF 39 erworben, so ergeben sich folgende Zustände:

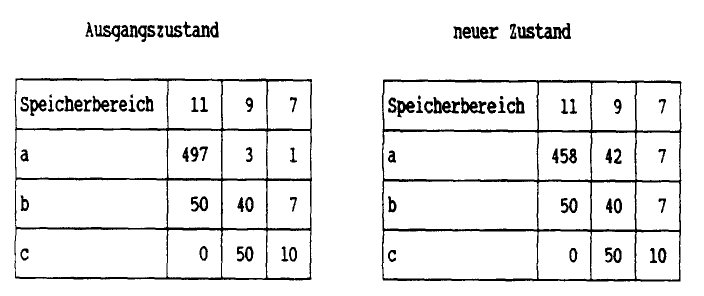

Da der Vorwarnwert **9b** überschritten wurde, wird von der Anzeigeeinheit **20** eine Mitteilung ausgegeben, welche den Zahlungsmittelinhaber auffordert, an die unten beschriebene zweite oder dritte Zahlstelle sich zu begeben, um nach Identifikation und/oder Authentizierung einen neuen Anfangswert **9a** (Wert 0) auf dem Zahlungsmittel **1** freizugeben.

Werden ausgehend vom unten dargestellten ursprünglichen Speicherzustand auf dem Zahlungsmittel eine Fahrkarte zu einem Betrag von CHF 3 erworben, so ergeben sich folgende Zustände:

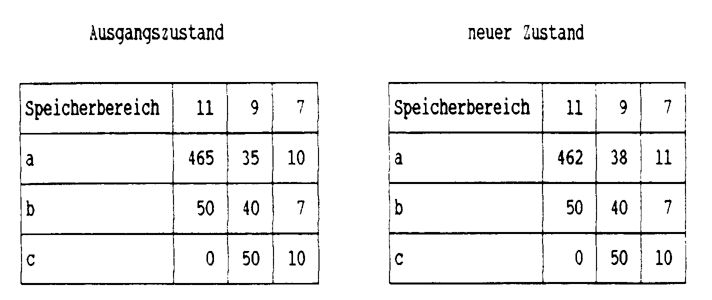

Da der Endwert **7c** durch den Bezug dieser Fahrkarte unterschritten worden wäre, ist der Bezug a priori nicht möglich. Der Karteninhaber muß erst eine Freigabe des Anfangswerts **7a** durchführen. Analog wird bei Überschreiten des Wertes **9c** sowie **11c** verfahren. (Hat die Zahlstelle einen Parameter, der höher als der Wert 10 ist, kann die Zahlung gemäß Beispiel trotzdem erfolgen.)

Als Variante können mit einem einzigen Zahlungsmittel **1** auch Waren- und Dienstleistungen von m nicht miteinander verrechnenden Pools bezogen werden, in dem das Speicherelement **11** m-fach als Speicherelemente **11**^{**1**}, **11**^{**2**}, ..., **11**^{**m**} geführt wird. Jeder Pool führt dabei seinen eigenen Zähler 11, 9 und 7. Es können jedoch auch, wie unten aufgeführt, als Variante, die m Pools gemeinsam die Zähler **9** und **7** verwalten.

Werden z. B. bei einer ersten Gesellschaft zwei Fahrkarten zum Gesamtpreis von CHF 4 und bei einer zweiten Gesellschaft drei Fahrkarten zu einem Gesamtpreis von CHF 7 bezogen, so ergeben sich ausgehend vom unten dargestellten Ausgangszustand, folgende Zustände:

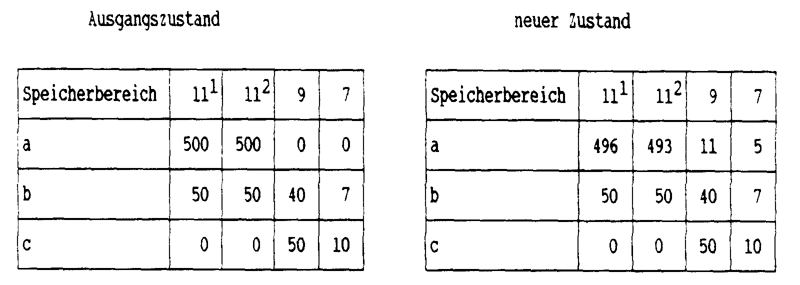

Die Verarbeitung der Vorwarnwerte **7b**, **9b** und **11b** sowie der Endwerte **7c**, **9c** und **11c** erfolgt analog zu den obigen Ausführungen.

Eine, in **Figur 3** dargestellte, zweite Zahlstelle **25** der Anordnung dient ebenfalls zum Begleichen, insbesondere von Dienstleistungsbezügen, wie einer Fahrberechtigung auf öffentlichen Verkehrsmitteln, Bezahlung von Straßen- und Brückenzoll, Eintrittskarten, etc.; mit ihr kann jedoch der Anfangswert **7a** wieder freigegeben werden. Die Zahlstelle 25 weist folgende logischen Einheiten auf:
- 27: eine PIN-Tastatur oder Einheit für ein biometrisches Identifikationsverfahren,
- 28: eine mechanische Aufnahmeeinheit für das Zahlungsmittel **1** oder eine andere Einheit, welche einen Dialog mit dem Zahlungsmittel **1** ermöglicht,
- 29: eine Verarbeitungseinheit,
- 30: eine Lese-/Schreibeinheit, mit der Informationen des Zahlungsmittels **1** verändert werden können,
- 31: eine Sicherheitseinheit, die eine off-line Authentizierung des Zahlungsmittels **1** ermöglicht (Option),
- 32: eine Anzeigeeinheit,
- 33: eine Vergleichereinheit,
- 34: einen Speicher,
- 35: einen Parameterspeicher und
- 36: eine Logikeinheit zur Verarbeitung von Erkennzungszeichen, z. B. PIN-Code.

Die Tastatur **27** dient zur Eingabe eines PIN-Codes mit dem die Identität zwischen dem Zahlungsmittel **1** und dem die Zahlstelle **25** bedienenden Zahlungsmittelinhaber feststellbar ist. Da eine Authentizitätsprüfung, wie bei der dritten Zahlstelle **39** vorgesehen, nicht möglich ist, ergibt sich ein geringerer Sicherheitsstandard, da das Zahlungsmittel **1** z. B. bereits gestohlen sein könnte.

Eine in **Figur 4** dargestellte dritte Zahlstelle **39** verfügt gegenüber der ersten und zweiten Zahlstelle **14** und **25** zusätzlich über eine Kommunikations-Schnittstelle, dank derer sie direkt mit räumlich entfernten Kontrollorganen des Zahlungssystems Kontakt aufnehmen kann. Die dritte Zahlstelle **39** kann somit folgende zusätzlichen Funktionen ausführen:
- eine on-line Authentizierung des Zahlungsmittels **1** durch das entfernte Kontrollorgan **41** des Zahlungssystems, das den Speicherwert **9a** berichtigen kann (z. B. Null-Stellung nach erfolgter Prüfung z. B. einer Sperrliste),
- Aufladen des Speicherwerts **11a** mit einem das Konto des Zahlungsmittelinhabers belastenden Geldbetrag **11a** und
- eine direkte Abbuchung vom Konto des Zahlungsmittelinhabers.

Die Zahlstelle **39** ist dadurch charakterisiert, daß sie mit einem bzw. mehreren räumlich entfernten Rechner bzw. Kontrollorganen des Zahlungsmittelsystems Kontakt aufnehmen kann. Sie weist folgende logische Einheiten auf:
- 43: eine PIN-Tastatur oder Einheit für ein biometrisches Identifikationsverfahren,
- 44: eine mechanische Aufnahmeeinheit für das Zahlungsmittel **1** oder eine andere Einheit, welche einen Dialog mit dem Zahlungsmittel **1** ermöglicht,
- 45: eine Verarbeitungseinheit,
- 46: eine Lese-/Schreibeinheit, mit der Informationen des Zahlungsmittels **1** verändert werden können,
- 47: eine Sicherheitseinheit, die eine off-line Authentizierung des Zahlungsmittels **1** ermöglicht (Option),
- 49: eine Anzeigeeinheit,
- 50: eine Vergleichseinheit,
- 51: einen Speicher,
- 52: einen Parameterspeicher,
- 53: eine Logikeinheit zur Verarbeitung von Erkennungszeichen, z. B. PIN-Code und
- 54: eine Kommunikationsschnittstelle mit einer Übertragungseinheit.

In die Speicher **7a** und **9a** kann auch ein Maximalwert eingeladen werden, von dem die jeweilige Anzahl Zahlstellenbenutzungen bzw. der gerade ausgegebene Betrag abgezogen wird. In die Speicher **7c** und **9c** würde dann anstelle des jeweiligen Maximalwerts ein Minimalwert als Endwert geladen; die in den Speichern **7b** und **9b** abgespeicherten Vorwarnwerte sind entsprechend angepaßt. D. h. die Vorwarnwerte werden hier ausgehend von höheren Werten zu tieferen Werten überschritten, während sie im vorangegangen Beispiel von tiefen zu höheren Werten überschritten wurden. Als Werte **7c**, **9c** und **11c** können auch vom Null abweichende negative bzw. positive Werte verwendet werden, welche die Steuerung der PIN-Eingabe und Überwachung eines Risikoaugenblickbetrags ermöglichen.

Anstelle der Magnetspur 3 kann auch ein Chip mit einzelnen Speicherelementen oder andere Kartentechnologien verwendet werden.

Anstelle das bargeldlose Zahlungsmittel in Kartenform auszubilden, können auch andere Formate verwendet werden. Es sollte jedoch darauf geachtet werden, daß der Gegenstand einerseits gut greif- und handhabbar, also nicht zu klein und andererseits nur so groß sein sollte, daß er nicht zu viel Platz wegnimmt und sich möglichst in der Kleidung des Zahlstellenbenutzers ohne zusätzliche Taschen transportieren läßt. Anstelle eines kartenförmigen Gegenstands können somit z. B. auch schlüsselartige Gegenstände verwendet werden.

Neben einer Zugriffskontrolle über einen, in die betreffende Zahlstelle eingebbaren PIN-Code, kann auch eine Zugriffskontrolle direkt auf dem Zahlungsmittel eingebaut sein, in dem erst ein von der ersten Zahlstelle an das Zahlungsmittel übermittelter Code die Speicherelemente öffnet. Dies kann schaltungstechnisch z. B. bei der Verwendung von speichernden Chips erfolgen oder durch Abspeicherung chiffrierten Daten, deren Dechiffrierungscode sich erst zusammen mit den Daten der betreffenden Zahlstelle und/oder des eingegebenen PIN-Codes ergeben.

## Patentansprüche

1. Verfahren als Sicherheitskonzept gegen unbefugte Verwendung eines mehrere Speicherelemente **(5, 7, 9, 11, 13)** aufweisenden Zahlungsmittels (1) beim bargeldlosen Begleichen von Waren- und/oder Dienstleistungsbezügen an mehreren Zahlstellen **(14, 25, 39)**, wobei die Begleichung an unterschiedlichen, insbesondere an einander sich unterscheidenden ersten, zweiten und dritten Zahlstellen **(14, 25, 39)**, ausgelegt zur bzw. ohne Prüfung der Identität des Zahlungsmittelinhabers und/oder der on-line Authentizität des Zahlungsmittels **(1)** erfolgt, Teilbeträge zur Begleichung von einem in einem ersten Speicherelement **(11)** des Zahlungsmittels **(1)** abgespeicherten Geldbetrag entnommen werden, wobei ein die Anzahl der Zahlstellenbenutzungen abspeicherndes zweites Speicherelement **(7a)** des Zahlungsmittels **(1)** um einen Wert auf eine neue Bezugsanzahl und ein in einem dritten Speicherelement **(9)** des Zahlungsmittels **(1)** abgespeicherter Risikobetrag um den Wert des Teilbetrags auf einen neuen Risikobetrag verändert sowie anschließend überprüft wird, ob ein zweiter oder dritter im zweiten bzw. dritten Speicherelement **(7, 9)** abgespeicherter Endwert durch die neue Bezugsanzahl bzw. den neuen Risikobetrag überschritten würde, wobei die Begleichung bei Überschreitung nicht sowie bei Nichtüberschreiten unter Abspeichern der neuen Bezugsanzahl und des neuen Risikobetrags im zweiten bzw. dritten Speicherelement **(7, 9)** sowie Veränderung des Geldbetrags um den Wert des Teilbetrags im ersten Speicherelement **(11)** ausgeführt wird.

2. Verfahren nach Anspruch 1, **dadurch gekennzeichnet**, daß die Zahlstellenbenutzungen ohne Identitäts- und Authentizitätsprüfung im zweiten Speicherelement **(7)** abgespeichert werden.

3. Verfahren nach Anspruch 1 oder 2, **dadurch gekennzeichnet**, daß eine Anzahl möglicher Zahlstellenbenutzungen als Anfangswert im zweiten Speicherelement **(7)** bereits nach der Identitätsprüfung an der zweiten oder dritten Zahlstelle **(25, 39)** freigegeben wird, damit weitere Begleichungen möglich sind.

4. Verfahren nach Anspruch 1 oder 2, **dadurch gekennzeichnet**, daß ein Anfangswert als ausgebbarer Risikobetrag und/oder als Anzahl möglicher Zahlstellenbenutzungen im dritten bzw. zweiten Speicherelement **(9, 7)** nach Identitäts- und/oder der Authentizitätprüfung **(1)** an der zweiten oder dritten Zahlstelle **(25, 39)** freigegeben wird bzw. werden, damit weitere Begleichungen möglich sind.

5. Verfahren nach Anspruch 1, **dadurch gekennzeichnet**, daß eine Vorwarnung ausgegeben wird, sofern ein erster oder zweiter oder dritter im ersten, zweiten bzw. dritten Speicherelement **(11, 7, 9)** abgelegter Vorwarnwert infolge Begleichungen überschritten wird, der bevorzugt zwischen 80 und 90%, ausgehend von einem Anfangswert möglicher Zahlstellenbenutzungen, eines ausgebbaren Risikobetrags bzw. eines ausgebbaren Gesamtgeldbetrags liegt, wobei eine Benutzung weiterer Zahlstellenbenutzungen bzw. eines restlichen Risikobetrags jedoch bis zum Erreichen eines der Endwerte noch möglich ist.

6. Verfahren nach einem der Ansprüche 1 bis 5, **dadurch gekennzeichnet,** daß der Geldbetrag im ersten Speicherelement **(11)** nur mit der dritten Zahlstelle **(39)** unter Identitäts- und Authentizitätsprüfung sowie einer Abbuchung vom Konto des Zahlungsmittelinhabers auf das Zahlungsmittel **(1)** aufgeladen wird.

7. Verfahren nach Anspruch 6, **dadurch gekennzeichnet,** daß bei Benutzung der dritten Zahlstelle **(39)** dem Zahlungsmittelinhaber datumsbedingte Informationen aus einem vierten Speicherelement **(13)** des Zahlungsmittels **(1)** ausgegeben werden, welche ihn auffordern, von seinem Konto aus Zahlungen zu einem vorgegebenen Termin vorzunehmen und in bevorzugter Weise jeweils nach Ausführung der betreffenden Zahlungsanweisung gelöscht werden.

8. Anordnung mit mehreren Zahlstellen **(14, 25, 39)** zur Durchführung des Verfahrens als Sicherheitskonzept nach einem der Ansprüche 1 bis 7, wobei nur ein Teil **(25, 39)** der Zahlstellen **(14, 25, 39)** eine Prüfeinrichtung für die Identität des Zahlungsmittelinhabers und/oder der Authentizität des Zahlungsmittels **(1)** aufweisen, alle Zahlstellen **(14, 25, 39)** mit einem einzigen mehrere Speicherelemente **(5, 7, 9, 11, 13)** aufweisenden bargeldlosen Zahlungsmittel **(1)** bedienbar sind, das Zahlungsmittel **(1)** ein erstes Speicherelement **(11)** für einen Geldbetrag, ein zweites Speicherelement **(7)** für eine Anzahl möglicher Zahlstellenbenutzungen und ein drittes Speicherelement **(9)** für einen Risikobetrag aufweist, und jede Zahlstelle **(14, 25, 39)** eine Verarbeitungseinheit **(21, 29, 45)**, mit der jeweils die vom Zahlungsmittel **(1)** gelesenen Daten infolge Waren- und/oder Dienstleistungsbegleichung veränderbar sind, eine Vergleichseinheit **(22, 33, 50)**, mit der ein Überschreiten eines Endwerts pro Speicherelement **(7, 9, 11)** durch eine der veränderten Daten feststellbar ist, und eine Abspeichereinheit **(17, 30, 46)** hat, mit der bei Nichtüberschreiten in das erste, zweite und dritte Speicherelement **(11, 7, 9)** die neuen Daten einschreibbar sind.

9. Anordnung nach Anspruch 8, **gekennzeichnet durch** einen im ersten, zweiten und dritten Speicherelement **(7, 9, 11)** des Zahlungsmittels **(1)** abgespeicherten Vorwarnwert, der bevorzugt zwischen 80 und 90%, ausgehend von einem Anfangswert möglicher Zahlstellenbenutzungen, eines ausgebbaren Risikobetrags sowie eines ausgebbaren Gesamtgeldbetrags liegt, und die Vergleichereinheit **(22, 33, 50)** in den Zahlstellen **(14, 25, 39)** zum Vergleichen der veränderten Daten mit auf dem Zahlungsmittel **(1)** abgespeicherten Vorwarnwerten sowie eine Anzeigeeinheit **(20, 32, 49)** zur Ausgabe einer Mitteilung bei Überschreiten eines der Vorwarnwerte durch veränderte Daten **(7, 9, 11)** ausgebildet ist.

10. Anordnung nach Anspruch 8 oder 9, **gekennzeichnet durch** eine erste Zahlstelle **(14)** ohne Identitäts- und Authentizitätsüberprüfungsmöglichkeit.

11. Anordnung nach einem der Ansprüche 8 bis 10, **gekennzeichnet durch** eine zweite Zahlstelle **(25)** mit einer off-line Überprüfungsmöglichkeit der Identität des Zahlungsmittelinhabers mit einer Eingabeeinheit und einer Logikeinheit **(36)**, damit anhand eines über die Eingabeeinheit **(27)** eingegebenen ersten Erkennungszeichens im Zusammenhang mit einem auf dem Zahlungsmittel **(1)** abgespeicherten zweiten Erkennungszeichen die Identität ermittelbar ist, um einen Anfangswert als ausgebbarer Risikobetrag und/oder als Anzahl möglicher Zahlstellenbenutzungen im dritten bzw. zweiten Speicherelement **(9, 7)** freizugeben, damit weitere Begleichungen möglich sind.

12. Anordnung nach einem der Ansprüche 8 bis 11, **gekennzeichnet durch** eine dritte Zahlstelle **(39)** mit Identitäts- und on-line Authentizitätsüberprüfungsmöglichkeit mit einer Verbindung **(54)** zu einer Kontrolleinheit, um bevorzugt zusätzlich zur Freigabe eines Anfangswerts als ausgebbaren Risikobetrag und/oder als Anzahl möglicher Zahlstellenbenutzungen, einen Geldbetrag auf das Zahlungsmittel **(1)** aufzuladen.

## Claims

1. Method as security concept against unauthorized use of a payment means (1) having a plurality of storage elements (5, 7, 9, 11, 13) during cashless settlement of goods purchases and/or services provided, at a plurality of paypoints (14, 25, 39), wherein settlement takes place at different paypoints, especially at first, second and third paypoints (14, 25, 39) differing from one another, arranged for or without checking of the identity of the owner of the payment means and/or of the on-line authenticity of the payment means (1), part sums for settlement are taken from a sum of money stored in a first storage element (11) of the payment means (1), wherein a second storage element (7a), storing the number of paypoint uses, of the payment means (1) is altered by a value to a new reference number, and a risk sum stored in a third storage element (9) of the payment means (1) is altered by the value of the part sum to a new risk sum and then a check is made as to whether a second or third end value stored in the second or third storage element (7, 9) would be exceeded by the new reference number or the new risk sum, respectively, and if it is exceeded settlement is not carried out, and if it is not exceeded settlement is carried out with the new reference number and the new risk sum being stored in the second and third storage element (7, 9) respectively and the sum of money being altered in the first storage element (11) by the value of the part sum.

2. Method according to Claim 1, **characterized in that** the paypoint uses are stored in the second storage element (7) without checking of identity and authenticity.

3. Method according to Claim 1 or 2, **characterized** **in that** a number of possible paypoint uses is made available as an initial value in the second storage element (7) after identity checking at the second or third paypoint (25, 39), so that further settlements are possible.

4. Method according to Claim 1 or 2, **characterized in that** an initial value as the risk sum that can be issued and/or as the number of possible paypoint uses, in the third and second storage element (9, 7) respectively, is or are made available after identity and/or authenticity checking (1) at the second or third paypoint (25, 39), so that further settlements are possible.

5. Method according to Claim 1, **characterized in that** a warning is issued, in so far as a first or second or third warning value filed in the first, second or third storage element (11, 7, 9) is exceeded as a result of settlements, which value is preferably between 80 and 90%, starting from an initial value of possible paypoint uses, of a risk sum that can be issued or of a total sum of money that can be issued, respectively, the use of further paypoint uses or of a remaining risk sum still being possible however until one of the end values is reached.

6. Method according to one of Claims 1 to 5, **characterized in that** the sum of money in the first storage element (11) is only charged to the payment means (1) at the third paypoint (39) with identity and authenticity checking and also deduction from the account of the owner of the payment means.

7. Method according to Claim 6, **characterized in that** when the third paypoint (39) is used, date-related information is issued to the owner of the payment means from a fourth storage element (13) of the payment means (1), which require him to undertake payments from his account by a certain date and are preferably erased in each case after the payment instruction in question has been complied with.

8. Arrangement with a plurality of paypoints (14, 25, 39) for the implementation of the method as security concept according to one of Claims 1 to 7, wherein only some (25, 39) of the paypoints (14, 25, 39) have a checking device for the identity of the owner of the payment means and/or the authenticity of the payment means (1), all paypoints (14, 25, 39) can be operated with a single cashless payment means (1) having a plurality of storage elements (5, 7, 9, 11, 13), the payment means (1) has a first storage element (11) for a sum of money, a second storage element (7) for a number of possible paypoint uses, and a third storage element (9) for a risk sum, and each paypoint (14, 25, 39) has a processing unit (21, 29, 45) with which data read from the payment means (1) as a result of settlement for goods and/or services provided can be altered, a comparison unit (22, 33, 50), with which the exceeding of an end value per storage element (7, 9, 11) can be ascertained by means of one of the altered data, and a storage unit (17, 30, 46) with which the new data can be entered in the first, second and third storage elements (11, 7, 9) if the value is not exceeded.

9. Arrangement according to Claim 8, **characterized by** a warning value which is stored in the first, second and third storage element (7, 9, 11) of the payment means (1) and which is preferably between 80 and 90%, starting from an initial value of possible paypoint uses, of a risk sum that can be issued, and of a total sum of money that can be issued, and the comparison unit (22, 33, 50) in the paypoints (14, 25, 39) is arranged to compare the altered data with warning values stored on the payment means (1) and also an indicator unit (20, 32, 49) is arranged to issue a notification when one of the warning values is exceeded by means of altered data (7, 9, 11).

10. Arrangement according to Claim 8 or 9, **characterized by** a first paypoint (14) without the possibility of checking identity and authenticity.

11. Arrangement according to one of Claims 8 to 10, characterized by a second paypoint (25) having an off-line possibility for checking the identity of the owner of the payment means with an input unit and a logic unit (36), so that by means of a first identification fed in by way of the input unit (27) in conjunction with a second identification stored on the payment means (1) the identity can be ascertained, in order to make available an initial value as the risk sum that can be issued and/or as the number of possible paypoint uses, in the third and second storage element (9, 7) respectively, so that further settlements are possible.

12. Arrangement according to one of Claims 8 to 11, **characterized by** a third paypoint (39) having the possibility of identity and on-line authenticity checking with a connection (54) to a control unit, in order, preferably in addition to the making available of an initial value as the risk sum that can be issued and/or as the number of possible paypoint uses, to charge a sum of money to the payment means (1).

## Revendications

1. Procédé, conçu comme concept de sécurité, contre l'utilisation non autorisée d'un moyen de paiement (1) présentant plusieurs éléments de mémorisation (5, 7, 9, 11, 13) lors du règlement sans espèces, à plusieurs offices de paiement (14, 25, 39), d'achats de marchandises et/ou de prestations de services, dans lequel le règlement s'effectue à des premier, deuxième et troisième offices de paiement différents (14, 25, 39), se différenciant notamment les uns des autres, respectivement conçus avec ou sans contrôle de l'identité du détenteur du moyen de paiement et/ou de l'authenticité en direct dudit moyen de paiement (1) ; des montants partiels sont prélevés pour le règlement d'une somme d'argent mémorisée dans un premier élément de mémorisation (11) du moyen de paiement (1) ; un deuxième élément de mémorisation (7a) du moyen de paiement (1), mémorisant le nombre d'utilisations des offices de paiement, est modifié d'une valeur pour obtenir un nouveau nombre d'achats, et un montant à risques, mémorisé dans un troisième élément de mémorisation (9) du moyen de paiement (1), est modifié de la valeur du montant partiel pour obtenir un nouveau montant à risques, après quoi il est vérifié si une deuxième ou troisième valeur finale, mémorisée dans le deuxième ou troisième élément respectif de mémorisation (7, 9), serait dépassée par le nouveau nombre d'achats ou, respectivement, par le nouveau montant à risques ; le règlement n'a pas lieu en cas de dépassement et a lieu, en cas de non-dépassement, avec mémorisation respective du nouveau nombre d'achats et du nouveau montant à risques dans le deuxième ou troisième élément de mémorisation (7, 9), ainsi qu'avec modification de la somme d'argent, de la valeur du montant partiel, dans le premier élément de mémorisation (11).

2. Procédé selon la revendication 1, caractérisé par le fait que les utilisations des offices de paiement sont mémorisées dans le deuxième élément de mémorisation (7), sans contrôle de l'identité et de l'authenticité.

3. Procédé selon la revendication 1 ou 2, caractérisé par le fait qu'un nombre d'utilisations possibles des offices de paiement est avalisé en tant que valeur initiale dans le deuxième élément de mémorisation (7), dans l'enchaînement direct du contrôle de l'identité au deuxième ou troisième office de paiement (25, 39), de telle sorte que d'autres règlements soient possibles.

4. Procédé selon la revendication 1 ou 2, caractérisé par le fait qu'une valeur initiale, représentant un montant à risques dépensable et/ou un nombre d'utilisations possibles des offices de paiement, est avalisée dans le troisième ou deuxième élément respectif de mémorisation (9, 7), après contrôle (1) de l'identité et/ou de l'authenticité au deuxième ou troisième office de paiement (25, 39), de telle sorte que d'autres règlements soient possibles.

5. Procédé selon la revendication 1, caractérisé par le fait qu'une alerte préalable est délivrée dans la mesure où est dépassée, suite à des règlements, une première, deuxième ou troisième valeur d'alerte préalable qui est stockée dans le premier, deuxième ou troisième élément respectif de mémorisation (11, 7, 9) et est comprise, de préférence, entre 80 et 90 % en partant respectivement d'une valeur initiale d'utilisations possibles des offices de paiement, d'un montant à risques dépensable ou d'une somme totale d'argent dépensable, une utilisation respective d'autres utilisations des offices de paiement, ou d'un montant résiduel à risques, demeurant néanmoins possible jusqu'à ce que soit atteinte l'une des valeurs finales.

6. Procédé selon l'une des revendications 1 à 5, caractérisé par le fait que la somme d'argent, dans le premier élément de mémorisation (11), est imputée au moyen de paiement (1) uniquement par le troisième office de paiement (39), avec contrôle de l'identité et de l'authenticité, ainsi qu'avec un débit au compte du détenteur du moyen de paiement.

7. Procédé selon la revendication 6, caractérisé par le fait que, en cas d'utilisation du troisième office de paiement (39), le détenteur du moyen de paiement reçoit, à partir d'un quatrième élément de mémorisation (13) dudit moyen de paiement (1), des informations calendaires qui invitent ledit détenteur à effectuer des paiements à partir de son compte, à une échéance préétablie, et sont de préférence effacées après exécution de l'ordre de paiement considéré.

8. Installation comprenant plusieurs offices de paiement (14, 25, 39) pour la mise en oeuvre du procédé, conçu comme concept de sécurité, selon l'une des revendications 1 à 7, dans laquelle seule une partie (25, 39) desdits offices de paiement (14, 25, 39) présente un dispositif de contrôle de l'identité du détenteur du moyen de paiement et/ou de l'authenticité dudit moyen de paiement (1) ; tous les offices de paiement (14, 25, 39) sont actionnables par un unique moyen (1) de paiement sans espèces, comprenant plusieurs éléments de mémorisation (5, 7, 9, 11, 13) ; le moyen de paiement (1) comprend un premier élément de mémorisation (11) pour une somme d'argent, un deuxième élément de mémorisation (7) pour un nombre d'utilisations possibles des offices de paiement et un troisième élément de mémorisation (9) pour un montant à risques ; et chaque office de paiement (14, 25, 39) comporte une unité de traitement (21, 29, 45 ) permettant de modifier respectivement les données lues par le moyen de paiement (1), suite à un règlement de marchandises et/ou de prestations de services, une unité de comparaison (22, 33, 50) permettant de constater un dépassement, par l'une des données modifiées, d'une valeur finale pour chaque élément de mémorisation (7, 9, 11), et une unité de mémorisation (17, 30, 46) permettant, en cas de non-dépassement, d'enregistrer les nouvelles données dans les premier, deuxième et troisième éléments de mémorisation (11, 7, 9).

9. Installation selon la revendication 8, caractérisée par une valeur d'alerte préalable qui est mémorisée dans les premier, deuxième et troisième éléments de mémorisation (7, 9, 11) du moyen de paiement (1) et est comprise, de préférence, entre 80 et 90 % en partant d'une valeur initiale d'utilisations possibles des offices de paiement, d'un montant à risques dépensable, ainsi que d'une somme totale d'argent dépensable ; et l'unité de comparaison (22, 33, 50) est réalisée, dans les offices de paiement (14, 25, 39), pour comparer les données modifiées à des valeurs d'alerte préalable mémorisées sur le moyen de paiement (1), et une unité d'affichage (20, 32, 49) est réalisée pour délivrer une notification en cas de dépassement, par des données modifiées (7, 9, 11), de l'une des valeurs d'alerte préalable.

10. Installation selon la revendication 8 ou 9, caractérisée par un premier office de paiement (14) sans possibilité de contrôle de l'identité et de l'authenticité.

11. Installation selon l'une des revendications 8 à 10, caractérisée par un deuxième office de paiement (25) avec une possibilité de contrôle en différé de l'identité du détenteur du moyen de paiement, comportant une unité d'entrée et une unité logique (36) pour que l'identité puisse être établie à l'appui d'un premier signe d'identification entré par l'intermédiaire de l'unité d'entrée (27), en corrélation avec un second signe d'identification mémorisé sur le moyen de paiement (1), de manière à avaliser, dans le troisième ou deuxième élément respectif de mémorisation (9, 7), une valeur initiale représentant un montant à risques dépensable et/ou un nombre d'utilisations possibles des offices de paiement, afin que d'autres règlements soient possibles.

12. Installation selon l'une des revendications 8 à 11, caractérisée par un troisième office de paiement (39) avec possibilité de contrôle de l'identité et de contrôle en direct de l'authenticité, comportant une connexion (54) avec un dispositif de contrôle afin d'imputer préférentiellement une somme d'argent, au moyen de paiement (1), en plus de l'avalisation d'une valeur initiale en tant que montant à risques dépensable et/ou nombre d'utilisations possibles des offices de paiement.
